# EUROPÄISCHE PATENTSCHRIFT

(11) **EP 2 464 504 B1**
(45) Veröffentlichungstag und Bekanntmachung des Hinweises auf die Patenterteilung: **16.04.2014**
(21) Anmeldenummer: 10732859.3
(22) Anmeldetag: 02.07.2010
(51) Int. Cl.: B29C 65/20, B29C 65/50, B60J 10/00, B60J 10/08

(54) **VERFAHREN ZUM VERBINDEN DES STOSSES VON DICHTUNGSPROFILEN SOWIE VORRICHTUNG ZU DESSEN DURCHFÜHRUNG**
METHOD FOR JOINING ENDS OF A AUTOMOTIVE SEAL STRIP AND CORRESPONDING DEVICE
MÉTHODE POUR JOINDRE LES EXTRÉMITÉS D'UN JOINT D'ÉTANCHÉITÉ D'UN VÉHICULE AUTOMOBILE ET DISPOSITIF CORRESPONDANT

(30) Priorität: 12.08.2009 DE 102009037216
(43) Veröffentlichungstag der Anmeldung: 20.06.2012
(73) Patentinhaber: ThyssenKrupp System Engineering GmbH, 74076 Heilbronn (DE)
(72) Erfinder: HAUPENTHAL, Horst-Günter, 54411 Hermeskeil (DE); FENGER, Norbert, 66773 Schwalbach/Elm (DE); MAIER, Michael, 66625 Nohfelden (DE)
(74) Vertreter: Kirchner, Sven
(86) Internationale Anmeldenummer: PCT/EP2010/003994
(87) Internationale Veröffentlichungsnummer: WO 2011/018131

(56) Entgegenhaltungen:
- EP-A1- 0 849 106
- EP-A2- 1 743 758
- DE-A1- 10 117 124
- DE-A1-102005 039 214
- US-B1- 6 554 040

## Beschreibung

Die Erfindung bezieht sich auf ein Verfahren zum Verbinden des Stoßes von zwei übereinstimmend profilierten Enden mindestens einer Dichtung nach Patentanspruch 1 und eine Vorrichtung zur Durchführung des Verfahrens nach Patentanspruch 6.

Bei der Türmontage von Kraftfahrzeugtüren werden auf unterschiedliche Weise Dichtungen auf die Tür und/oder die Türöffnung aufgeklebt. Die Dichtungen können entweder als geschlossene Ringe von Hand oder mit Hilfe einer Applikationsplatte auf die Tür oder Türöffnung geklebt oder als sogenannte Endlosdichtungen von einer Speicherrolle abgerollt und direkt aufgeklebt werden.

Aus der gattungsgemäßen WO 2007/019961 A1 ist bekannt, die Dichtung zunächst an der Oberfläche eines Fahrzeuges oder Fahrzeugteiles anzubringen und die Enden an dem Stoß bündig aneinander zu legen, wobei an der nicht angeklebten Seite der Dichtung die Enden voneinander weg bewegt werden, um einen Arbeitsspalt zu erzeugen, der in Richtung der Befestigungsfläche des Dichtungsprofils an der Oberfläche des Fahrzeuges oder Fahrzeugteils ausläuft. In den V-förmigen Arbeitsspalt wird dann eine Schweiß- bzw. Klebefolie eingebracht, die durch Zufuhr von Wärmeenergie mit den Enden des Dichtungsprofils verschweißt wird, nachdem der Arbeitsspalt am Stoß aufgehoben wurde. Bei der Erzeugung des Arbeitsspaltes besteht hierbei das Problem, dass eine Ablösung des aufgeklebten Dichtungsprofils von dem Fahrzeugteil verhindert werden muss und dazu spezielle Maßnahmen ergriffen werden müssen.

In der EP 0849106 B1 ist eine Applikationsplatte beschrieben, bei der die umlaufende Dichtung auf verstellbare Halteleisten aufgebracht und die Dichtung anschließend mit der Applikationsplatte gegen die Tür oder die Türöffnung gepresst wird. Die Dichtung kann dabei entweder von Hand auf die Halteleiste aufgesteckt oder auch mit einem Roboter eingerollt werden. Problematisch ist dabei bei Aufbringen einer Endlosdichtung ebenfalls die Verbindung der Enden der Dichtung.

Der Erfindung liegt daher die Aufgabe zugrunde ein Verfahren und eine Vorrichtung vorzuschlagen, bei dem die Enden der Dichtung vor endgültiger Verklebung mit dem Fahrzeugbauteil miteinander verbunden werden, solange die Dichtung noch an der Applikationsanlage angeordnet ist.

Der erfindungsgemäße Vorschlag sieht ein Verfahren zum Verbinden des Stoßes von zwei übereinstimmend profilierten Enden mindestens einer Dichtung vor, die zuvor auf die Halteleisten einer Applikationsplatte aufgerollt wurde bzw. wurden und deren Enden bündig aneinander liegen, wobei die Enden in Längsrichtung der Dichtung voneinander weg bewegt werden, um einen Arbeitsspalt mit parallelem oder im wesentlichen parallelen Abstand der Enden voneinander zu erzeugen und wobei in den Arbeitsspalt nacheinander eine Heizplatte zum Aufheizen der Enden der Dichtung und eine Schweiß- bzw. Klebefolie eingebracht wird, um mit dem anschließenden Schließen des Arbeitsspaltes die Enden der Dichtung miteinander zu verbinden und wobei der geschlossene Dichtungsring mit Hilfe der Applikationsplatte auf die Oberfläche eines Fahrzeuges oder Fahrzeugteiles aufgebracht und damit verklebt wird.

Die Dichtung kann vorzugsweise mit einem Roboter auf die Halteleisten der Applikationsanlage aufgerollt und hierzu von einer Rolle durch ein Magazin mit Puffer dem Rollkopf zugeführt werden, wobei der Dichtungsanfang mit einem Sensor auf der Applikationsplatte erkannt wird. Am Ende des Aufrollvorganges wird die Dichtung auf Maß abgeschnitten und danach können die Enden der Dichtung nach dem erfindungsgemäßen Verfahren verbunden werden. Zur Bildung des Arbeitsspaltes werden die zu verbindenden Enden vorzugsweise um je ca. 5 mm auseinander bewegt, um ein Heizmittel, vorzugsweise eine Heizplatte in den Arbeitsspalt zu führen. Zur Bildung des Arbeitsspaltes kann die Dichtung entweder auf den Halteleisten in ihrer Längsrichtung verschoben werden, oder es können auch die Halteleisten in der Nähe der Enden gemeinsam mit der Dichtung auseinander gefahren werden. In den Arbeitsspalt zwischen den erwärmten Dichtungsenden kann nach Entfernen der Heizplatte eine Schweiß- bzw. Klebefolie geführt werden, gegen die dann die Dichtungsenden gepresst werden. Dazu hat es sich als günstig erwiesen, die Enden der Dichtung jeweils mit einer Andrückeinheit zumindest während der Bewegung in Längsrichtung der Dichtung zu fixieren. Nach Verbinden der Enden können schließlich die außerhalb des Dichtungsprofiles überstehenden Teile der Schweiß- bzw. Klebefolie durch eine Bewegung der Verfahreinheit für die Schweiß- bzw. Klebefolie insbesondere durch eine Hin- und Herbewegung abgerissen werden.

Bei der in Patentanspruch 6 definierten Vorrichtung zur Durchführung des Verfahrens wird vorgeschlagen, dass auf einer Applikationsplatte Halteleisten zur Aufnahme einer Dichtung und mit einem Antrieb versehene Anfahrsegmente zur Bewegung der Enden der Dichtung in Dichtungslängsrichtung angeordnet sind.

Die Unteransprüche 7 bis 13 enthalten sinnvolle Ausführungsformen dazu.

Erfindungsgemäß kann also auf einer an sich bekannten Applikationsplatte die Einrichtung zur Erzeugung und Aufhebung des Arbeitsspaltes zwischen den Enden der Dichtung positioniert werden. Unabhängig von der Applikationsplatte kann ein Bearbeitungskopf mit einer Heizplatte und einer Schweiß- bzw. Klebefolie vorzugsweise an einem Roboterarm befestigt und mit diesem oberhalb der Applikationsplatte positioniert werden.

Die Erfindung wird anhand der beigefügten Figuren 1 bis 7 beispielsweise näher erläutert. Es zeigen
- Figur 1: in perspektivischer Darstellung einen Bearbeitungskopf 1 oberhalb einer nur teilweise dargestellten Applikationsplatte 7
- Figur 2: einen Bearbeitungskopf 1 in der Position nach Figur 1 in der Seitenansicht
- Figur 3: einen Bearbeitungskopf 1 oberhalb einer Applikationsplatte 7 schematisch in einer Seitenansicht im Vergleich zu Figur 2 um 90 Grad gedreht
- Figur 4: einen Schnitt nach der Linie A-A von Figur 5
- Figur 5: eine Seitenansicht entsprechend Figur 3 während des Aufheizens der Dichtungsenden
- Figur 6: einen Schnitt nach der Line B-B von Figur 7
- Figur 7: eine Seitenansicht entsprechend zu Figuren 3 und 5 beim Verkleben der Dichtungsenden.

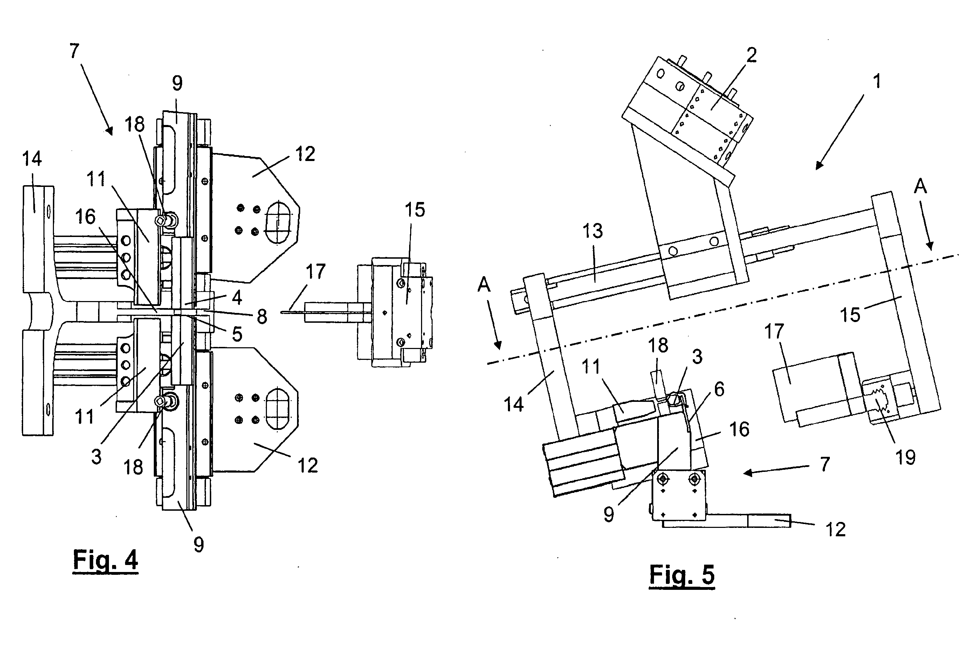

Der erfindungsgemäße Bearbeitungskopf 1 wird in üblicher Weise über die Roboteranbindung 2 mit einem Roboterarm verbunden. An dem Bearbeitungskopf 1 ist eine gemeinsame Linearführung 13 für eine Heizplatte 16 und eine Schweiß- bzw. Klebefolie 17 angeordnet. Die Heizplatte 16 ist über eine Verfahreinheit 14 mit der Linearführung 13 und die Schweiß- bzw. Klebefolie 17 ist über die gegenüber liegende Verfahreinheit 15 mit der Linearführung 13 verbunden. Heizplatte 16 und Schweißfolie 17 haben jeweils denselben Abstand zur Linearführung 13, so dass sie bei einer Betätigung der Linearführung 13 nacheinander genau in den Arbeitsspalt 8 zwischen den Enden 4 und 5 der Dichtung 3 eingefahren werden können. Im abgesenkten Zustand des Bearbeitungskopfes 1 (vergleiche Figuren 4 bis 7) befindet sich die Verfahreinheit 14 für die Heizplatte 16 auf der einen Seite der Dichtung 3, während die Verfahreinheit 15 für die Schweiß- bzw. Klebefolie 17 auf der anderen Seite der Dichtung 3 angeordnet ist.

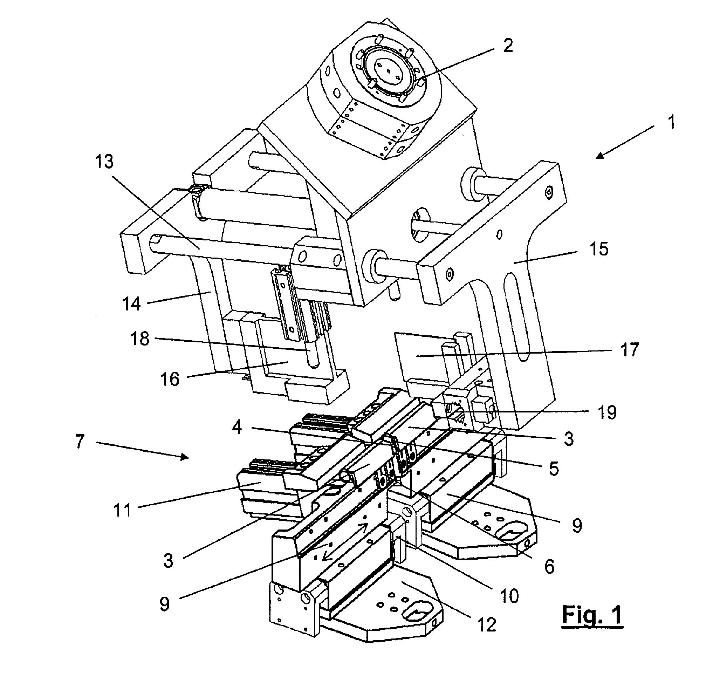

Im unteren Teil der Figuren 1 bis 3 sind jeweils Teile der Applikationsplatte 7 dargestellt, die mit der Befestigungsvorrichtung 12 auf der eigentlichen nicht dargestellten Trägerplatte der Applikationsplatte 7 befestigt werden können. Die Dichtung 3 ist jeweils auf die Halteleisten 6 aufgesteckt. Mit Hilfe der Anfahrsegmente 9, die jeweils über einen Antrieb 10 in Richtung des Doppelpfeiles verfahren werden können, können die Enden 4 und 5 der Dichtung 3 soweit auseinander gefahren werden, dass ein ausreichender Arbeitsspalt 8 entsteht. Mit den Anfahrsegmenten 9 sind jeweils Andrückeinheiten 11 verbunden, die in Richtung des dargestellten Doppelpfeiles quer gegen die Dichtung 3 im Bereich der Enden 4 und 5 gepresst werden können. Bearbeitungskopf 1 und die dargestellten Teile der Applikationsplatte 7 werden über Absteckstifte 18 positionsgenau miteinander gekoppelt.

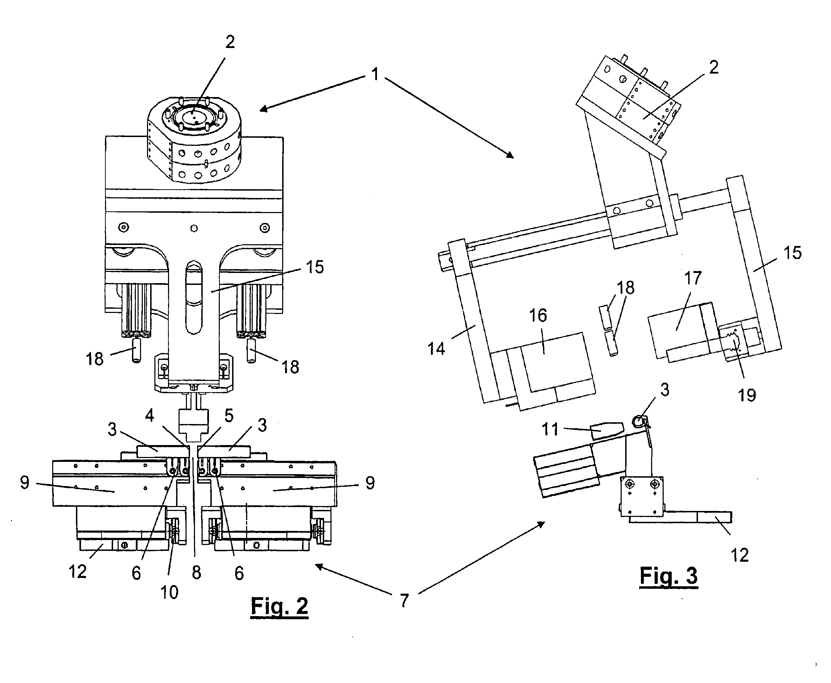

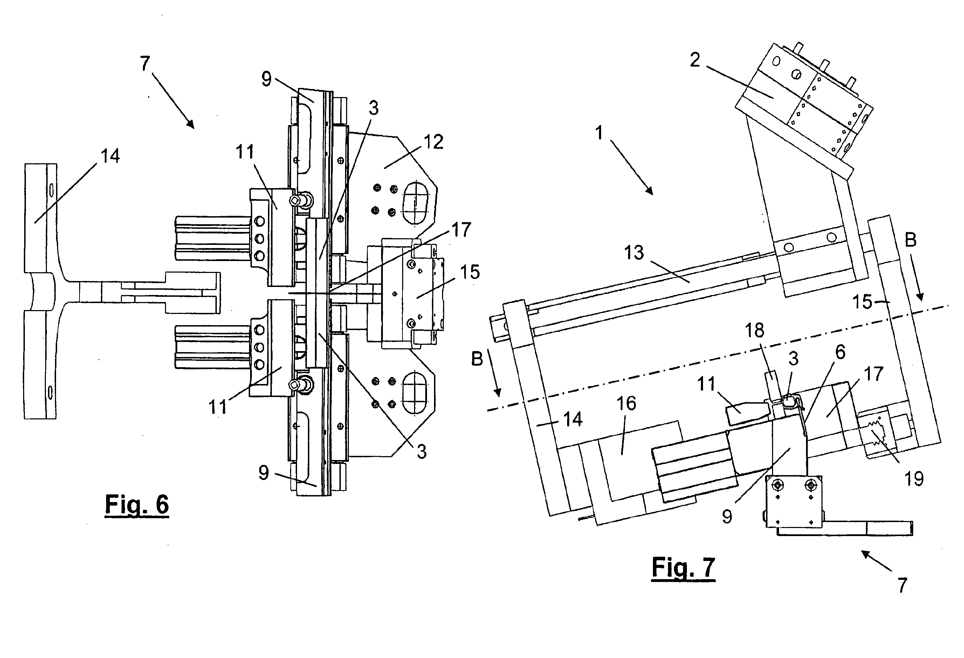

Zum Aufheizen der Dichtungsenden wird der Bearbeitungskopf 1 aus der oberen Position (vergleiche Figuren 2 und 3) in eine untere Position (vergleiche Figuren 4 und 5) abgesenkt. Dort wird durch Bewegung der Linearführung 13 die am Anfahrelement 14 befestigte Heizplatte 16 in den Arbeitsspalt 8 eingebracht. Nach dem Aufheizen der Dichtungsenden wird die Linearführung 13 in entgegen gesetzter Richtung bewegt, damit die Heizplatte 16 aus dem Arbeitsspalt 8 entfernt und die Schweißfolie 17 in den Arbeitsspalt 8 zwischen den aufgeheizten Enden 4 und 5 der Dichtung 3 eingefahren werden kann (vergleiche Figuren 6 und 7). Unmittelbar danach wird mit dem Anfahrsegment 9 der Arbeitsspalt 8 geschlossen. Die beiden Enden 4 und 5 der Dichtung 3 bilden zusammen mit der Schweißfolie 17 dann eine feste Verbindung. Zum Schluss wird mittels des Abreißmechanismus 19 durch eine Relativbewegung zwischen Verfahreinheit 15 und Schweißfolie 17 der überstehende Teil der Schweißfolie 17 abgerissen. Nach Entfernen des Bearbeitungskopfes 1 aus dem Bereich der Applikationsplatte 7 kann dieser mit dem geschlossenen Dichtungsring gegen das Fahrzeugbauteil gepresst werden. Dabei kann entweder die Applikationsplatte 7 zum Beispiel mit einem Roboter gegen das Fahrzeugteil bewegt werden oder auch das an einem Roboterarm befestigte Bauteil auf die stationär angeordnete Applikationsplatte 7 zubewegt werden.

### Bezugszeichenliste

- 1: Bearbeitungskopf
- 2: Roboteranbindung
- 3: Dichtung
- 4: Ende (von 3)
- 5: Ende (von 3)
- 6: Halteleiste (an 9,7)
- 7: Applikationsplatte (oberer Teil)
- 8: Arbeitsspalt (zwischen 4 und 5)
- 9: Anfahrsegmente (für 3,6)
- 10: Antrieb (für 9)
- 11: Andrückeinheit
- 12: Befestigungsvorrichtung
- 13: Linearführung (an 1, für 14,15)
- 14: Verfahreinheit (für 16)
- 15: Verfahreinheit (für 17)
- 16: Heizplatte
- 17: Schweiß- bzw. Klebefolie
- 18: Absteckstift
- 19: Abrissmechanismus (für 17)

## Patentansprüche

1. Verfahren zum Verbinden des Stoßes von zwei übereinstimmend profilierten Enden (4,5) mindestens einer Dichtung (3), **dadurch gekennzeichnet, dass** die Dichtung (3) zuvor auf die Halteleisten (6) einer Applikationsplatte (7) aufgerollt wurde bzw. wurden und deren Enden (4,5) bündig aneinander liegen, wobei die Enden (4,5) in Längsrichtung der Dichtung (3) voneinander weg bewegt werden, um einen Arbeitsspalt (8) mit parallelem oder im wesentlichen parallelen Abstand der Enden (4,5) voneinander zu erzeugen und wobei in den Arbeitsspalt (8) nacheinander eine Heizplatte (16) zum Aufheizen der Enden (4,5) der Dichtung (3) und eine Schweiß- bzw. Klebefolie (17) eingebracht wird, um mit dem anschließenden Schließen des Arbeitsspaltes (8) die Enden (4,5) der Dichtung (3) miteinander zu verbinden und wobei der geschlossene Dichtungsring mit Hilfe der Applikationsplatte (7) auf die Oberfläche eines Fahrzeuges oder Fahrzeugteiles aufgebracht und damit verklebt wird.

2. Verfahren nach Anspruch 1, **dadurch gekennzeichnet, dass** die Dichtung (3) zur Bildung des Arbeitsspaltes (8) auf den Halteleisten (6) in ihrer Längsrichtung verschoben wird.

3. Verfahren nach Anspruch 1, **dadurch gekennzeichnet, dass** zur Bildung des Arbeitsspaltes (8) die Halteleisten (6) in der Nähe der Enden (4,5) gemeinsam mit der Dichtung (3) auseinander gefahren werden.

4. Verfahren nach einem der Ansprüche 1 bis 3, **dadurch gekennzeichnet, dass** die Enden (4,5) der Dichtung (3) jeweils mit einer Andrückeinheit (11) zumindest während der Bewegung in Längsrichtung der Dichtung (3) fixiert werden.

5. Verfahren nach mindestens einem der vorherigen Ansprüche, **dadurch gekennzeichnet, dass** nach Verbinden der Enden (4,5) die außerhalb des Dichtungsprofiles überstehenden Teile der Schweiß- bzw. Klebefolie (17) durch eine Bewegung der Verfahreinheit (15) für die Schweiß- bzw. Klebefolie (17) abgerissen wird.

6. Vorrichtung zur Durchführung des Verfahrens nach einem der Ansprüche 1 bis 5, **dadurch gekennzeichnet, dass** auf einer Applikationsplatte (7) Halteleisten (6) zur Aufnahme einer Dichtung (3) und mit einem Antrieb (10) versehene Anfahrsegmente (9) zur Bewegung der Enden (4, 5) der Dichtung (3) in Dichtungslängsrichtung angeordnet sind.

7. Vorrichtung nach Anspruch 6, **dadurch gekennzeichnet, dass** an einem Bearbeitungskopf (1), der unabhängig von der Applikationsanlage (7) bewegbar ist, eine Heizplatte (16) und eine Schweiß- bzw. Klebefolie (17) angeordnet sind, die nacheinander in einen Arbeitsspalt (8) zwischen den Enden (4, 5) der Dichtung (3) einbringbar sind.

8. Vorrichtung nach Anspruch 7, **dadurch gekennzeichnet, dass** Heizplatte (16) und Schweißfolie (17) mit einer gemeinsamen Linearführung (13) verbunden sind, um nacheinander die Heizplatte (16) und die Schweiß- bzw. Klebefolie (17) in den Arbeitsspalt (8) zu bewegen.

9. Vorrichtung nach Anspruch 7 oder 8, **dadurch gekennzeichnet, dass** die Schweißfolie (17) an einer Verfahreinheit (15) angeordnet ist, an der auch ein Abreißmechanismus (19) für nach dem Verbinden der Enden (4, 5) außerhalb des Dichtungsprofiles überstehende Teile der Schweiß- bzw. Klebefolie (17) vorhanden ist.

10. Vorrichtung nach Anspruch 9, **dadurch gekennzeichnet, dass** der Abreißmechanismus in einer sich in Längsrichtung der Dichtung (3) erstreckenden Führung bewegbar ist.

11. Vorrichtung nach Anspruch 7, **dadurch gekennzeichnet, dass** der Bearbeitungskopf (1) mit Hilfe eines Roboterarmes bewegbar ist.

12. Vorrichtung nach einem der Ansprüche 7 bis 11, **dadurch gekennzeichnet, dass** der Mechanismus zur Erzeugung des Arbeitsspaltes (8) zwischen den Enden (4, 5) der Dichtung (3) am Bearbeitungskopf (1) angeordnet ist.

13. Vorrichtung nach einem der Ansprüche 7 bis 12, **dadurch gekennzeichnet, dass** Applikationsplatte (7) und Bearbeitungskopf (1) mittels Absteckstiften (18) positionsgenau miteinander verbindbar sind.

## Claims

1. A method for connecting the joint of two matching profiled ends (4,5) of at least one gasket (3), **characterized in that** the gasket(s) (3) has or have been previously rolled onto the retaining strips (6) of an application plate (7) and that the ends (4,5) thereof make full contact with each other, the ends (4,5) being moved away from each other in the longitudinal direction of the gasket (3) in order to produce a working gap (8) having a parallel or substantially parallel distance of the ends (4,5) from each other, and that a heating plate (16) for heating up the ends (4,5) of the gasket (3) and a welding or adhesive film (17) is introduced sequentially into the working gap (8) in order to connect the ends (4,5) of the gasket to each other when the working gap (8) is subsequently closed, the closed gasket ring being placed on and thus adhered to the surface of a vehicle or vehicle component by means of the application plate (7).

2. The method according to claim 1, **characterized in that** the gasket (3) is pushed onto the retaining strips (6) in the longitudinal direction thereof for forming the working gap (8).

3. The method according to claim 1, **characterized in that** the retaining strips (6) are moved apart from each other in the vicinity of the ends (4,5) together with the gasket (3) for forming the working gap (8).

4. The method according to any one of the claims 1 through 3, **characterized in that** the ends (4,5) of the gasket (3) are each fixed by means of a pressing unit (11) at least during the motion in the longitudinal direction of the gasket (3).

5. The method according to at least one of the preceding claims, **characterized in that** after connecting the ends (4,5), the parts of the welding or adhesive film (17) protruding outside of the gasket profile are torn off by a motion of the traveling unit (15) for the welding or adhesive film (17).

6. A device for performing the method according to any one of the claims 1 through 5, **characterized in that** retaining strips (6) for receiving a gasket (3) and approach segments (9) having a drive (10) for moving the ends (4, 5) of the gasket (3) in the longitudinal direction of the gasket are disposed on an application plate (7)

7. The device according to claim 6, **characterized in that** a heating plate (16) and a welding or adhesive film (17) are disposed on a processing head (1) displaceable independently of the application system (7) and can be introduced sequentially into a working gap (8) between the ends (4, 5) of the gasket (3),

8. The device according to claim 7, **characterized in that** the heating plate (1B) and welding film (17) are connected to a common linear guide (13) in order to sequentially move the heating plate (16) and the welding or adhesive film (17) into the working gap (8).

9. The device according to claim 7 or 8, **characterized in that** the welding film (17) is disposed on a traveling unit (15) on which a tear-off mechanism (18) is present for the parts of the welding or adhesive film (17) protruding outside of the gasket profile after connecting the ends (4, 5).

10. The device according to claim 9, **characterized in that** the tear-off mechanism can be displaced in a guide extending in the longitudinal direction of the gasket (3).

11. The device according to claim 7, **characterized in that** the processing head (1) can be displaced by means of a robotic arm.

12. The device according to any one of the claims 7 through 11, **characterized in that** the mechanism for producing the working gap (8) between the ends (4, 5) of the gasket (3) is disposed on the processing head (1).

13. The device according to any one of the claims 7 through 12, **characterized in that** the application plate (7) and processing head (1) can be connected to each other with accurate positioning by means of locating pins (18).

## Revendications

1. Procédé pour raccorder l'about de deux extrémités (4,5) profilées de manière concordante au moins d'un joint (3), **caractérisé en ce que** le(s) joint(s) (3) a été ou ont été enroulé(s) auparavant sur les languettes de retenue (6) d'une plaque d'application (7) et ses/leurs extrémités (4,5) sont posées affleurées les unes par rapport aux autres, sachant que les extrémités (4, 5) sont éloignées les unes des autres dans le sens longitudinal du joint (3) afin de créer une fente de travail (8) avec une distance parallèle ou essentiellement parallèle des extrémités (4, 5) l'une à l'autre et sachant qu'une plaque de chauffe (16) pour chauffer les extrémités (4, 5) du joint (3) et une feuille de soudage ou de collage (17) sont successivement insérées dans la fente de travail (8) pour, par la fermeture ultérieure de la fente de travail (8), raccorder l'une avec l'autre les extrémités (4, 5) du joint (3) et sachant que la bague d'étanchéité fermée est appliquée à l'aide de la plaque d'application (7) sur la surface d'un véhicule ou d'une pièce de véhicule et collée sur ce/cette dernier/dernière.

2. Procédé selon la revendication 1, **caractérisé en ce que** le joint (3) est déplacé dans son sens longitudinal sur les languettes de retenue (6) pour former la fente de travail (8).

3. Procédé selon la revendication 1, **caractérisé en ce que** pour former la fente de travail (8), les languettes de retenue (6) sont écartées les unes des autres avec le joint (3) près des extrémités (4, 5).

4. Procédé selon l'une des revendications 1 à 3, **caractérisé en ce que** les extrémités (4, 5) du joint (3) sont respectivement fixées à l'aide d'une unité de pression (11) au moins durant le mouvement dans le sens longitudinal du joint (3).

5. Procédé selon au moins l'une des revendications précédentes, **caractérisé en ce qu'**après le raccordement des extrémités (4, 5), les parties de la feuille de soudage ou de collage (17) faisant saillie hors du profilé d'étanchéité sont arrachées par un mouvement de l'unité de déplacement (15) pour la feuille de soudage ou de collage (17).

6. Dispositif pour exécuter le procédé selon l'une des revendications 1 à 5, **caractérisé en ce que** des languettes de retenue (6) pour accueillir un joint (3) et des segments de mise en marche (9) équipés d'un entraînement (10) pour déplacer les extrémités (4, 5) du joint (3) dans le sens longitudinal du joint (3) sont disposés sur une plaque d'application (7).

7. Dispositif selon la revendication 6, **caractérisé en ce qu'**une plaque de chauffe (16) et une feuille de soudage ou de collage (17) pouvant être insérées successivement dans une fente de travail (8) entre les extrémités (4, 5) du joint (3) sont disposées à une tête d'usinage (1) pouvant être déplacée indépendamment de l'installation d'application (7).

8. Dispositif selon la revendication 7, **caractérisé en ce que** la plaque de chauffe (16) et la feuille de soudage (17) sont reliées par un guidage linéaire commun (13) afin déplacer successivement la plaque de chauffe (16) et la feuille de soudage ou de collage (17) dans la fente de travail (8).

9. Dispositif selon la revendication 7 ou 8, **caractérisé en ce que** la feuille de soudage (17) est disposée à une unité de déplacement (15), à laquelle est en outre disposé un mécanisme d'arrachage (19) pour les parties de la feuille de soudage ou de collage (17) faisant saillie hors du profilé d'étanchéité après le raccordement des extrémités (4, 5).

10. Dispositif selon la revendication 9, **caractérisé en ce que** le mécanisme d'arrachage peut être déplacé dans un guidage s'étendant dans le sens longitudinal du joint (3).

11. Dispositif selon la revendication 7, **caractérisé en ce que** la tête d'usinage (1) peut être déplacée à l'aide d'un bras de robot.

12. Dispositif selon l'une des revendications 7 à 11, **caractérisé en ce que** le mécanisme pour générer la fente de travail (8) entre les extrémités (4, 5) du joint (3) est disposé à la tête d'usinage (1).

13. Dispositif selon l'une des revendications 7 à 12, **caractérisé en ce que** la plaque d'application (7) et la tête d'usinage (1) peuvent être reliées à position exacte l'une avec l'autre au moyen de chevilles d'arrêt (18).
